# EUROPÄISCHE PATENTSCHRIFT

(11) **EP 1 342 506 B1**
(45) Veröffentlichungstag und Bekanntmachung des Hinweises auf die Patenterteilung: **14.01.2009**
(21) Anmeldenummer: 03002246.1
(22) Anmeldetag: 01.02.2003
(51) Int. Cl.: B05B 15/12

(54) **Kabine zur Beschichtung von Gegenständen mit Pulver**
Powder coating booth
Cabine de poudrage

(30) Priorität: 05.03.2002 DE 10209489
(43) Veröffentlichungstag der Anmeldung: 10.09.2003
(73) Patentinhaber: EISENMANN Anlagenbau GmbH & Co. KG, 71032 Böblingen (DE)
(72) Erfinder: Hihn, Erwin, 72141 Walddorfhäslach (DE); Bezner, Wolfgang, 71101 Schönaich (DE)
(74) Vertreter: Ostertag, Ulrich

(56) Entgegenhaltungen:
- EP-A- 1 010 471
- WO-A-95/28233
- WO-A-98/28088
- US-A- 5 855 509
- PATENT ABSTRACTS OF JAPAN vol. 006, no. 186 (C-126), 22. September 1982 (1982-09-22) & JP 57 099363 A (TAIKISHA LTD), 21. Juni 1982 (1982-06-21)

## Beschreibung

Die Erfindung betrifft eine Kabine zur Beschichtung von Gegenständen mit Pulver, insbesondere zum Pulverlackieren, mit
a) einem Gehäuse, in dessen oberem Bereich ein über einen Einlaß mit Zuluft beschickbares Luftplenum ausgebildet ist, das nach unten durch eine Filterdecke begrenzt ist;
b) mindestens einer Applikationseinrichtung in dem Gehäuse, mit welcher die Gegenstände mit Pulver beaufschlagbar sind;
c) mindestens einer Absaugöffnung im unteren Bereich des Gehäuses, über die ein Gemisch aus Luft und überschüssigem Pulver absaugbar und einer Rückgewinnungseinheit zuführbar ist.
   Beim Beschichten von Gegenständen mit Pulver, insbesondere beim Pulverlackieren, ist es unvermeidlich, daß ein erheblicher Teil des Pulvers nicht an den Gegenständen haften bleibt. Zur Wiedergewinnung dieses auch als "Overspray" bezeichneten Überschußpulvers ist es bekannt, durch den Innenraum der Kabine von oben nach unten einen Luftstrom zu leiten, der das Überschußpulver aufnimmt. Das so entstandene Luft-/Pulvergemisch wird über mindestens eine Absaugöffnung im unteren Bereich der Kabine abgesaugt und einer Filtereinheit zugeführt. In dieser wird das Pulver abgeschieden, um der Wiederverwertung zugeleitet zu werden. Auf diese Weise lassen sich erhebliche Kosteneinsparungen beim Pulververbrauch erzielen.
   Bekannte Kabinen der eingangs genannten Art besitzen eine Filterdecke, die über ihre gesamte Fläche hinweg mehr oder weniger gleichmäßig luftdurchlässig und mit entsprechenden Filtermatten belegt ist. Der Gedanke dabei war, im Inneren der Kabine eine möglichst gleichmäßige Luftströmung von oben nach unten zu erzeugen. Es hat sich jedoch herausgestellt, daß von diesen bekannten Filterdecken eine gewisse Verschmutzungsgefahr ausgeht und an den zu beschichtenden Ggegenständen Luftverwirbelungen hervorgerufen werden, welche das Beschichtungsergebnis beeinträchtigen können.
   Aufgabe der vorliegenden Erfindung ist es, eine Kabine der eingangs genannten Art so weiterzubilden, daß das Beschichtungsergebnis verbessert ist.
   Diese Aufgabe wird erfindungsgemäß dadurch gelöst, daß
d) die Filterdecke nur in einem Randbereich luftdurchlässig ist und in ihrem mittleren Bereich aus luftundurchlässigem Material besteht.

Mit der vorliegenden Erfindung wird erkannt, daß es nicht nur nicht notwendig ist sondern sogar ungünstig sein kann, im mittleren Bereich der Kabine, in dem sich die zu beschichtenden Werkstücke befinden, eine von oben nach unten verlaufende Luftströmung zu erzeugen. Diese würde bei der Umströmung der Gegenstände nur zu Luftverwirbelungen führen, die sich ungünstig auf die Qualität der Beschichtung auswirken können. Bei den bekannten, über ihre gesamte Fläche durchlässigen Filterdecken war es zudem möglich, daß sich aus den beladenen Filtern Partikel lösten und auf die beschichteten Gegenstände herabfielen, was ebenfalls zu Beeinträchtigungen der Oberflächenqualität führte. Schließlich war der Filterwechsel bei den bekannten Filterdecken mit einer erheblichen Verschmutzung der gesamten Kabine verbunden.

Erfindungsgemäß werden im wesentlichen nur wandnahe Luftvorhänge eingesetzt, welche die zu beschichtenden Gegenstände nicht frontal anblasen, dagegen die Wände der Kabine reinigen und in ihrer Wirksamkeit, was die Abführung des Überschußpulvers angeht, hinter den bekannten, über den gesamten Querschnitt der Kabine reichenden Luftströmen nicht zurückbleiben.

Zweckmäßig ist, wenn die Filterdecke in ihrem mittleren Bereich aus elektrisch nicht leitfähigen Material besteht. Dieses Material zieht das Pulver, das zur Beschichtung im allgemeinen elektrisch aufgeladen wird, nicht an, so daß im mittleren Bereich der Filterdecke auch keine Pulveranhaftungen entstehen können. Es gibt somit keine Möglichkeit, daß von diesem mittleren, über den zu beschichtenden Gegenständen liegenden Bereich der Filterdecke Partikel auf die Gegenstände herabfallen können.

Vorteilhafterweise besteht die Filterdecke in ihrem mittleren Bereich aus Kunststoff.

Bei einer besonders bevorzugten Ausführungsform der Erfindung ist auf dem Boden der Kabine eine nach oben ragende Schürze angeordnet, welche die mindestens eine Ansaugöffnung umgibt, wobei außerhalb der Schürze zumindest entlang eines Teils der Wände eine Absaugrinne verläuft, über welche das wandnahe Luft-/Pulvergemisch der Entsorgung zugeführt werden kann. Mit dieser Schürze wird also die Gesamtströmung des Luft-/Pulvergemischs in zwei Teilströme unterteilt: Der wandnahe Teilstrom, der im allgemeinen stärker verschmutzt ist, wird über die Absaugrinne abgeführt und verworfen, während der weiter innen liegende, im allgemeinen saubere Teil der Luft-/Pulvermischung der Wiederverwertung zugeleitet wird. Durch die Position und Höhe der Schürze kann Einfluß darauf genommen werden, zu welchen Anteilen die Gesamtströmung des Luft-/Pulvergemischs auf die beiden Teilströme aufgeteilt wird.

Das Verhältnis der beiden Gemischströmungen kann auch durch die Veränderung der ABsaugung in der Absaugrinne und in der zur Wiederverwertung führenden Absaugöffnung bestimmt werden.

Von Vorteil ist dabei, wenn die Schürze so weit nach oben geführt ist, daß sie mindestens den unteren Bereich der zu beschichtenden Gegenstände umgibt. Auf diese Weise kann die Geschwindigkeit des Luft-/Pulvergemischs in dem Spalt zwischen Werkstück und Schürze nach Bedarf erhöht werden.

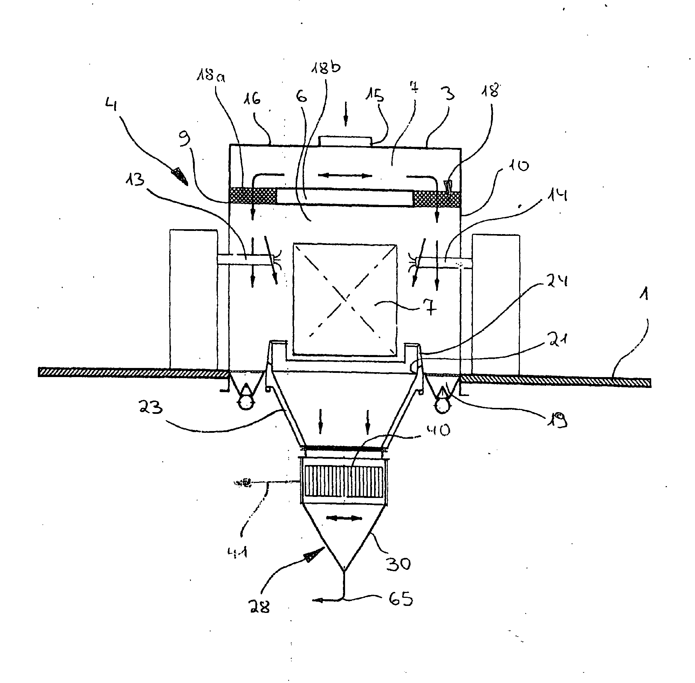

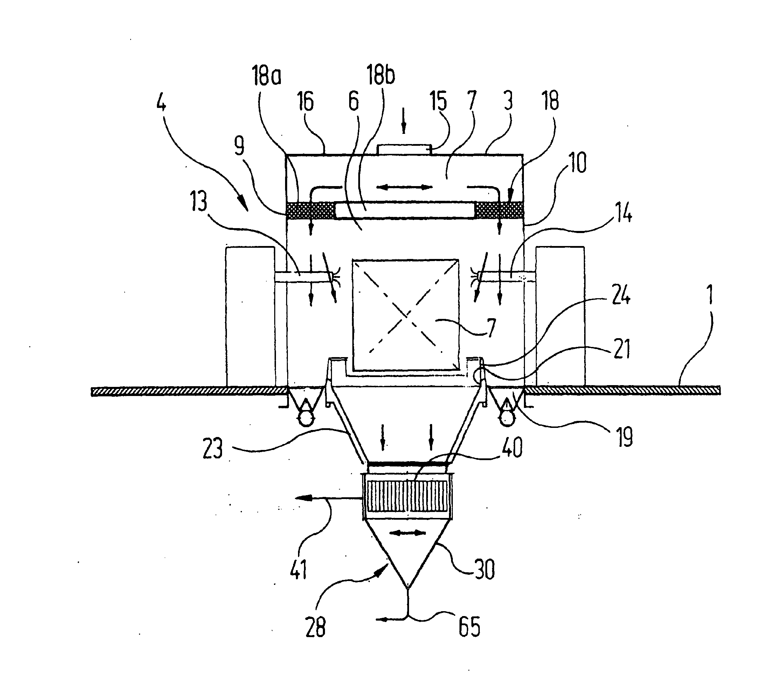

Ein Ausführungsbeispiel der Erfindung wird nachfolgend anhand der Zeichnung näher erläutert; die einzige Figur zeigt schematisch eine Pulverlackierkabine.

Die Pulverlackierkabine ist in der Zeichnung insgesamt mit dem Bezugszeichen 4 versehen. Sie umfaßt ein im wesentlichen quaderförmiges Gehäuse 3 mit in den Stirnseiten 6 vorgesehenen, in der Zeichnung nicht dargestellten verschließbaren Toren, über welche die zu beschichtenden Gegenstände 7 mit Hilfe eines nicht dargestellten Fördersystems in den Innenraum des Gehäuses 3 eingebracht und wieder aus dem Gehäuse 3 herausgefahren werden. In den gegenüberliegenden, parallel zur Förderrichtung verlaufenden Seitenwänden 9, 10 des Gehäuses 3 sind Öffnungen vorgesehen, durch welche Applikationseinrichtungen 13, 14 ins Innere des Gehäuses 3 ragen. Die Applikationseinrichtungen 13, 14 geben das Beschichtungspulver auf die zu beschichtenden Gegenstände 7 während deren Bewegung oder in Stillstandszeiten ab.

Zur Abführung des Überschußpulvers, das sich nicht auf den Gegenständen 7 niederschlägt, wird im Innenraum des Gehäuses 3 der Pulverlackierkabine 4 eine Luftströmung aufrechterhalten, die durch Pfeile angedeutet ist. Diese Luftströmung beginnt oben in einem Luftplenum 7, dem über eine Einlaßöffnung 15 in der Oberseite 16 des Gehäuses 3 Zuluft zugeführt wird. Das Luftplenum 7 wird unten durch eine Filterdecke 18 begrenzt. Die Filterdecke 18 weist einen sich entlang der Wände 6, 9, 10 des Gehäuses 3 erstreckenden Randbereich 18a auf, in dem in bekannter Weise Filtermaterial angeordnet ist, über welches die Zuluft das Luftplenum 7 verlassen kann. Der mittlere Bereich 18b der Filterdecke 18 besteht dagegen aus nicht leitfähigem Kunststoff und ist luftundurchlässig.

Durch die geschilderte Ausgestaltung der Filterdecke 18 wird erreicht, daß die Zuluft das Luftplenum 7 in Richtung auf den darunter liegenden Innenraum des Gehäuses 3 nicht als vollflächiger Luftstrom sondern nur in Form einer Art "Luftvorhang" verläßt, der sich im wesentlichen entlang der Wände 6, 9, 10 der Pulverkabine 4 erstreckt. Der mittlere, luftundurchlässige Bereich 18b dagegen überdeckt im wesentlichen die Gegenstände 7. Diese werden also an ihrer Oberseite nicht frontal angeströmt. Da der mittlere Bereich 18b der Filterdecke 18 aus nicht leitendem Material besteht, neigen die in den Applikationseinrichtungen 13, 14 zur Beschichtung elektrisch geladenen Pulverteilchen nicht dazu, sich in diesem mittleren Bereich 18b der Filterdecke 18 niederzuschlagen. Es besteht somit auch keine Gefahr, daß von diesem mittleren Bereich 18b auf die direkt darunter befindlichen, möglicherweise frisch beschichteten Gegenstände 7 Partikel herunterfallen.

Entlang der Wände 6, 9, 10 des Gehäuses 3 verläuft im Boden der Pulverlackierkabine 4 eine Absaugrinne 19, welche mit einem Zentralgebläse der Pulverlackierkabine 4 verbunden ist, das seinerseits das hier abgesaugte Pulver einer Entsorgung als Abfall zuführt.

Im mittleren Bereich befindet sich im Boden der Pulverlackierkabine 4 eine verhältnismäßig großflächige Absaugöffnung 21, an die sich nach unten ein Absaugtrichter 23 anschließt. An die untere Öffnung des Absaugtrichters 23 ist eine Filtereinheit 28 dicht angeflanscht. Diese Filtereinheit 28 enthält ein Filter 40, welches das in dem zugeführten Luft-/Pulvergemisch enthaltene Pulver zurückhält. Die Luft wird über eine Leitung 41 abgesaugt, während das Pulver in den unteren, sich trichterförmig verjüngenden Abschnitt des Gehäuses 30 der Filtereinheit 28 herabfällt und über eine Leitung 65 in einen Sammelbehälter überführt werden kann, in dem das Pulver zur Wiederverwertung bereitgehalten wird.

Die oben beschriebene Pulverlackierkabine funktioniert wie folgt:

Im Betrieb werden die zu beschichtenden Gegenstände 7 mit Hilfe des nicht dargestellten Fördersystems über das Tor in einer der Stirnwände 6 des Gehäuses 3 in den Innenraum des Gehäuses 3 eingebracht und dort mit Hilfe der Applikationseinrichtungen 13, 14 beaufschlagt. Das an den Gegenständen 7 nicht anhaftende Überschußpulver gerät in die Luftvorhänge, die entlang der Wände 6, 9, 10 des Gehäuses 3, aus den Randbereichen 18a der Filterdecke kommend, von oben nach unten strömen. Die so entstehende Gesamtströmung aus Luft und Pulver wird von der Schürze 24 in zwei Anteile geteilt: Der wandnahe Anteil, der erfahrungsgemäß stärker verschmutzt ist, gelangt in die Absaugrinne 19 und wird, wie oben erwähnt, einer Entsorgung zugeführt. Der innere Anteil der Luft-/ Pulvermischung dagegen gelangt über die Absaugöffnung 21 in den Absaugtrichter 23 und von dort in die Filtereinheit 28, wo das Pulver abgeschieden und über die Leitung 65 zur Wiederverwertung geleitet wird.

Durch die Position und Höhe der Schürze 24 läßt sich Einfluß darauf nehmen, zu welchem Anteil die Gesamtströmung aus Luft und Pulver der Entsorgung bzw. der Wiederverwertung zugeführt wird. Dadurch, daß die Schürze 24 nach oben so weit hochgeführt ist, daß sie den unteren Bereich der zu beschichtenden Gegenstände 7 umgibt, entsteht hier ein Spalt, also eine Verengung des Strömungswegs, in dem sich die Strömungsgeschwindigkeit des Luft-/Pulvergemischs erhöht. Eine derartige Anströmung der zu beschichtenden Gegenstände 7 im unteren Bereich ist in vielen Fällen erwünscht. Die Höhe der in dem Spalt herrschenden Geschwindigkeit läßt sich dabei durch Wahl der Breite des Abstands zwischen Schürze 24 und Außenkontur des Gegenstands 7 beeinflussen.

## Patentansprüche

1. Kabine zum Beschichten von Gegenständen mit Pulver, insbesondere zum Pulverlackieren, mit
a) einem Gehäuse, in dessen oberem Bereich ein über einen Einlaß mit Zuluft beschickbares Luftplenum ausgebildet ist, das nach unten durch eine Filterdecke begrenzt ist;
b) mindestens einer Applikationseinrichtung in dem Gehäuse, mit welcher die Gegenstände mit Pulver beaufschlagbar sind;
c) mindestens einer Absaugöffnung im unteren Bereich des Gehäuses, über die ein Gemisch aus Luft und überschüssigem Pulver absaugbar und einer Rückgewinnungseinheit zuführbar ist,
**dadurch gekennzeichnet, daß**
d) die Filterdecke (18) nur in einem Randbereich (18a) luftdurchlässig ist und in ihrem mittleren Bereich (18b) aus luftundurchlässigem Material besteht.

2. Kabine nach Anspruch 1, **dadurch gekennzeichnet,**
**daß** die Filterdecke (18) in ihrem mittleren Bereich (18b) aus elektrisch nicht leitfähigem Material besteht.

3. Kabine nach Anspruch 2, **dadurch gekennzeichnet,**
**daß** die Filterdecke (18) in ihrem mittleren Bereich (18b) aus Kunststoff besteht.

4. Kabine nach einem der vorhergehenden Ansprüche,
**dadurch gekennzeichnet, daß** auf ihrem Boden eine nach oben ragende Schürze (24) angeordnet ist, welche die mindestens eine Ansaugöffnung (21) umgibt, und daß außerhalb der Schürze (24) zumindest entlang eines Teils der wände eine Absaugrinne (19) verläuft, über welche das wandnahe Luft-/Pulvergemisch der Entsorgung zugeführt werden kann.

5. Kabine nach Anspruch 4, **dadurch gekennzeichnet,**
**daß** die Schürze (24) so weit nach oben geführt ist, daß sie mindestens den unteren Bereich der zu beschichtenden Gegenstände (7) umgibt.

## Claims

1. Booth for coating objects with powder, in particular for powder painting, having
a) a housing, in the upper region of which there is formed an air plenum, which can be charged with supply air via an inlet and is bounded downwardly by a filter ceiling;
b) at least one application device in the housing, with which device powder can be applied to the objects;
c) at least one extraction opening in the lower region of the housing, via which opening a mixture of air and excess powder can be extracted and supplied to a recovery unit,
**characterised in that**
d) the filter ceiling (18) is air-permeable in a marginal region (18a) only and in its central region (18b) consists of air-impermeable material.

2. Booth according to Claim 1, **characterised in that** the filter ceiling (18) consists of electrically non-conductive material in its central region (18b).

3. Booth according to Claim 2, **characterised in that** the filter ceiling (18) consists of plastic in its central region (18b).

4. Booth according to one of the preceding claims, **characterised in that** there is arranged on its bottom an upwardly projecting apron (24) which surrounds the at least one extraction opening (21), and **in that**, outside the apron (24), an extraction channel (19) runs at least along part of the walls, via which channel the air/powder mixture close to the walls can be passed on for disposal.

5. Booth according to Claim 4, **characterised in that** the apron (24) is extended upwards to such a degree that it surrounds at least the lower region of the objects (7) to be coated.

## Revendications

1. Cabine pour le revêtement d'objets à l'aide d'une poudre, en particulier pour le laquage à la poudre, comprenant
a) un boîtier dans la région supérieure duquel est ménagée une chambre à air qui peut être alimentée en air d'arrivée, par l'intermédiaire d'une admission, et est délimitée vers le bas par une coiffe ou couverture filtrante ;
b) au moins un dispositif applicateur logé dans ledit boîtier, et par lequel de la poudre peut être appliquée sur lesdits objets ;
c) au moins un orifice d'évacuation par aspiration, pratiqué dans la région inférieure du boîtier, et par l'intermédiaire duquel un mélange d'air et de poudre excédentaire peut être évacué, par aspiration, et peut être dirigé vers une unité de récupération,
**caractérisée par le fait que**
d) la coiffe ou couverture filtrante (18) est perméable à l'air uniquement dans une région marginale (18a) et est constituée ou est réalisée, dans sa région centrale (18b), d'un matériau imperméable à l'air.

2. Cabine selon la revendication 1, **caractérisée par le fait que** la coiffe filtrante (18) consiste ou est réalisée, dans sa région centrale (18b), en un matériau dépourvu de conductivité électrique.

3. Cabine selon la revendication 2, **caractérisée par le fait que** la coiffe filtrante (18) consiste ou est réalisée en une matière plastique dans sa région centrale (18b).

4. Cabine selon l'une des revendications précédentes, **caractérisée par le fait qu'**un tablier (24) saillant vers le haut, placé sur le fond de ladite cabine, ceinture le au moins un orifice d'aspiration (21) ; et **par le fait qu'**une rigole (19) d'évacuation par aspiration, par l'intermédiaire de laquelle le mélange air/poudre proche des parois peut être amené vers l'élimination, s'étend à l'extérieur dudit tablier (24), au moins le long d'une partie desdites parois.

5. Cabine selon la revendication 4, **caractérisée par le fait que** le tablier (24) s'étend, vers le haut, d'une distance propre à ceinturer au moins la région inférieure des objets (7) devant être revêtus.
